# EUROPEAN PATENT SPECIFICATION

(11) **EP 3 270 313 B1**
(45) Date of publication and mention of the grant of the patent: **01.04.2020**
(21) Application number: 16179053.0
(22) Date of filing: 12.07.2016
(51) Int. Cl.: G06F 21/32, G06F 21/62, G06F 3/0488, G06F 21/12

(54) **OPTICAL AUTHORIZATION METHOD FOR PROGRAMS AND FILES**
OPTISCHES AUTORISIERUNGSVERFAHREN FÜR PROGRAMME UND DATEIEN
PROCÉDÉ D'AUTORISATION OPTIQUE POUR DES PROGRAMMES ET DES FICHIERS

(43) Date of publication of application: 17.01.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(56) References cited:
- EP-A1- 2 960 822
- US-A1- 2006 105 745
- US-A1- 2014 115 725
- US-A1- 2016 103 988

## Description

The present invention refers to a method for accessing a restricted program or a restricted file according to claim 1 and to a computer program product for executing such a method.

### Background of the Invention

Document US2005041840A1 discloses a mobile phone with image recognition function for allowing users to use the mobile phone according to an image recognition acknowledgement result includes a housing, an image-capturing module including a lens for capturing an image, and an image recognition module installed inside the housing for recognizing the image captured by the lens of the image-capturing module.

Document US9269009 discloses various embodiments which enable a computing device to incorporate frame selection or preprocessing techniques into a text recognition pipeline in an attempt to improve text recognition accuracy in various environments and situations. For example, a mobile computing device can capture images of text using a first camera, such as a rear-facing camera, while capturing images of the environment or a user with a second camera, such as a front-facing camera. Based on the images captured of the environment or user, one or more image preprocessing parameters can be determined and applied to the captured images in an attempt to improve text recognition accuracy.

Document US2014226000A1 discloses a method for operating a mirror-display including: operating the system in idle mode wherein image is displayed on the monitor and the processor awaits the presence of a user in front of the camera; once a user presence is identified, switching the operation of the mirror-display into mirror mode, wherein the camera continuously sends captured images to the processor, the processor flips the captured images to reverse right and left sides and applies transformation mapping to generate modified images that appear to mimic reflection of a mirror, and displaying the modified images on the monitor. During idle mode the camera continuously sends background images to the processor, and the user presence is identified by the processor detecting changes in the background images.; The processor performs face recognition process on the captured image and interrogates a database to determine whether an account corresponding to the user exists in the database.

Document CN104869220A discloses a safe mobile phone answering method. The method comprises that a standard face identification template is obtained; when a mobile phone has an incoming call, a camera of the mobile phone is automatically started, and obtains video images in front of the mobile phone; face identification is carried out on the video images by a face identification technology, and a present human face is identified from the video images; an identified present face image is compared with correlation coefficients of the standard face identification template stored in a database for authentication, and whether the face image matches the standard face identification template is determined; and when it is determined that the face image matches the standard template and a corresponding answering button is received, a control unit of the mobile phone enables answering operation, and otherwise, the answering operation fails.

Document CN103678979A provides a method and device for hiding privacy data. According to the method for hiding privacy data, face data of an authorized user of a terminal are obtained in advance and stored, when it is monitored that the terminal is unlocked and the moving state of the terminal is changed, the face data of a current user of the terminal are captured through front-facing camera-shooting equipment of the terminal, the captured face data are authenticated according to the stored face data, when the current user triggers a client program of the terminal, if the authenticated result is that the current user is the authenticated user of the terminal, the user privacy data and user non-privacy data in the terminal are provided, and if the authenticated result is that the current user is an unauthenticated user of the terminal, only the non-privacy data in the terminal are provided and the user privacy data in the terminal are hidden. The method and device for intelligently hiding privacy data realize intelligent hiding of the user privacy data stored in the terminal based on the face recognition technology.

Application based authorization and payment authorization can be done with PIN code, finger print reader or special drawings. However, these methods are sufficient to maintain desired speed at the home screen it is not possible to authorize applications or mobile payments at enough speed. The main reason of slow authorization is either user enter unique information at the time whenever authorization needed, because of security needs or it needs to read biometric information at the time authorization needed and all biometric reading hardware and software have significant delay. Also the unique information need to be isolated in a secure communication.

Document US2014115725 A1 provides a method of restricting the use of a file that includes receiving an input of setting a region by a touch drag operation or a touch draw operation on a screen, receiving an input of a fingerprint of a user, and setting a lock on at least one file included in the region by matching the at least one file and the input of the fingerprint.

Document EP2960822 A1 provides a method for locking a file, which belongs to the field of electronic devices. The method includes: acquiring biological feature recognition information of a current user, wherein the biological feature recognition information includes fingerprint information, voiceprint information, iris information or facial information; and locking a first designated file by using the biological feature recognition information of the current user.

In the embodiments of the present invention, a designated file is locked by using biological feature recognition information, such that pictures or videos may be hidden, and personal privacy of a current user may be effectively protected, and user experience is improved. Moreover, the user may choose which file to be locked as needed, which is flexible in use.

### Object of the Invention

Thus, it is the object of the present invention to provide a method and a computer program product for executing such a method that enables a higher comfort, in particular a faster access, with respect to the accessing process of restricted programs or restricted files.

### Description of the Invention

The before mentioned object is solved by a method for accessing a restricted program or a restricted file. Said method preferably comprises at least the steps: Providing an end-user device having at least one screen and at least one optical detection means, displaying elements representing individual programs or files on a screen of said at least one screen, wherein the maximum number of programs or files provided or installed on the end-user device is larger than the number of programs or files that can be displayed at a time on the screen, displaying further elements representing further programs or files on the screen due to a selection command, in particular a sliding command, wherein at least some of the previous displayed elements are not displayed any more due to the selection command, detecting biometric features of a person that has caused the selection command by means of the optical detection means, wherein the detection of biometric features is triggered by the selection command, generating detection data representing said biometric features,
comparing the detection data with reference data representing biometric features provided in a data storage means, generating at least one value representing a matching degree of one or more predefined features, allowing respectively enabling respectively providing access to one or more restricted programs or one or more restricted files in case a matching degree is above a predefined threshold and in case an element representing such a program or file is displayed on the screen.

Thus, the present invention can be alternatively be considered as a body part, in particularly face, recognition method for application based authorization and/or for mobile payment authorization.

For mobile payment authorization when transaction started immediately face recognition is done and creates a key temporarily if payment is continued.

Advantageous embodiments may be configured according to any claim and/or the following specification parts.

According to a preferred embodiment of the present invention the selection command causes displaying of a selection of elements representing programs or files, wherein a plurality of selection commands causes displaying of a plurality of different selections of elements representing programs or files, in case a displayed selection of elements represents only non-restricted programs and/or files the selection command does preferably not trigger the detection of biometric features.

Actually, it is one possible solution to keep face recognition running all the time.

At least one restricted program provides an encrypted data exchange path via at least one server means to a master unit according to a further preferred embodiment of the present invention, wherein an interaction between the master unit and the program takes place in dependency of commands inserted via the display and/or a key board of the end-user device.

The master unit provides according to a further preferred embodiment of the present invention data representing financial transactions, geographic features, video content and/or acoustic content. Thus, the master unit can be an external server unit that provides one or more special services, in particular online payment.

The biometric features are according to a further preferred embodiment of the present invention features of the face of a human and/or features of a finger print of a human and/or features of the voice of a human, wherein the human is preferably a user of the end-user device respectively the actual user of the end-user device. It is also conceivable that the biometric features are combined or evaluated at a time or in a row. This leads to an even stronger data set and thus to a more secure system.

The reference data is stored according to a preferred embodiment of the present invention on a read only memory of the end user device. This is beneficial, since the data cannot be manipulated due to hardware conditions. Thus, the security data respectively the data set representing biometric data is preferably kept in secure enclave like physical memory. Nevertheless, it is also possible to store the date in rewriteable or erasable memory.

In case access is allowed key code data is routed according to a further preferred embodiment of the present invention from a preferably encrypted key data container of the end-user device to a routine of the restricted program for unlocking said program. Alternatively, in case access is allowed key code data is requested by a routine of the restricted program for unlocking said program, wherein the key code data is requested from a preferably encrypted key data container provided on said end-user device. Biometric data, representing body part, in particular face, information are preferably kept on read-only isolated memory, preferably with a firmware, which only gives an output of authorization code if an authorization is established. The end-user device is preferably a TV, a laptop, a smartphone, a tablet PC, a desktop PC, a smart watch or any other electronic multimedia device.

Thus, the invention can be used in any smart device with a screen and object recognition, in particular face recognition, capabilities, but target devices are mobile phones and tablet PCs. Application wise all applications which needs specific authorization can use the inventive method respectively system. The present method respectively system is highly preferable used in mobile payment procedures. Preferably, at least one body part, in particular the face, of the user is captured by an optical detection means, in particular camera, that is coupled to the end-user device or which is structurally a part of the end-user device. Any log-in or verification during such a payment procedure can be authorized by the inventive method or system. The optical detection means, in particular camera device, comprises one or multiple cameras and/or comprises one means for IR- and/or laser detection and/or a time-of-flight detection.

For application based authorization, the inventive method enables the front camera while each page scrolled and creates biometric face data and send it to firmware which responds back to OS with key codes for encrypted applications, so that every time a page is changed respectively a section command is issued all crypto needed for available applications are ready temporarily, and they will be send respectively routed to the selected application respectively the pressed application. So that it works faster than known authorization methods.

The before mentioned object is also solved by a computer program product for executing of one of the preceding methods.

Further benefits, goals and features of the present invention will be described by the following specification of the attached figures, in which exemplarily components of the invention are illustrated. Components of the devices and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1: demonstrates the general authorization process;
- Fig. 2: a process of creating authorization keys for each application; and
- Fig. 3: a flowchart of the system.

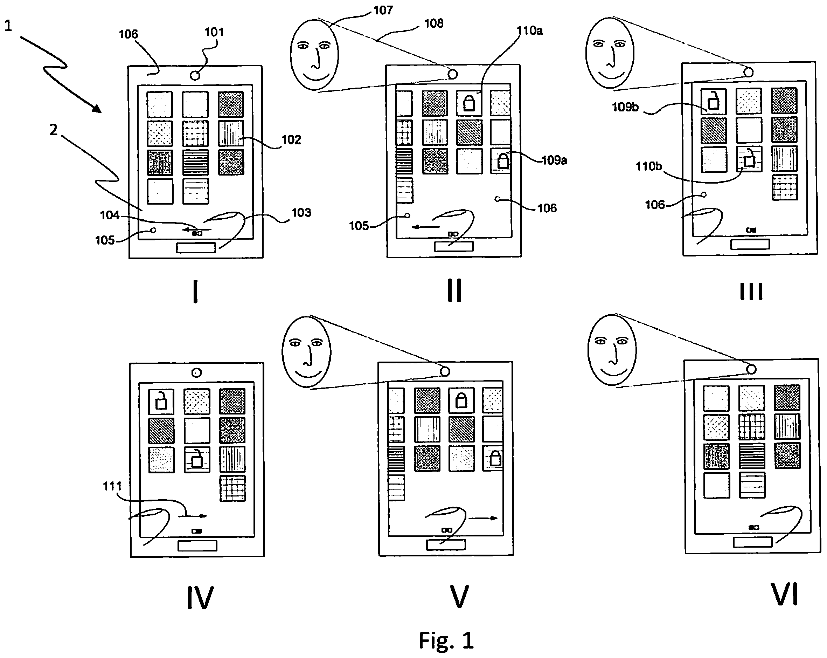

Fig. 1 shows an end-user device 1. Said end-user device 1 is equipped with a front camera (also any other face recognition or remote biometric is possible) 101 and a screen 2. In case the end-user device 1 is operated multiple applications or files are represented on screen 2 by figurative elements, in particular icons. Some of these applications 102 can be accessed without any security concerns. That mean such applications are preferably not locked.

In case at least one or preferably some different figurative elements are shown representing further applications or files an evaluation of body part features of the user takes place in case one of said further applications or files is at least partially locked. Thus, an object recognition is carried out that compares stored data representing a specific body part of the user with data generated by the camera and representing at least one body part of the present user of the end-user device. In case a predefined number of features or a predefined amount of data or an alternatively previously defined parameter matches to a predefined degree with the captured data (representing body part features of the actual user), then the respective application/s or file/s is/are unlocked.

The further figurative elements are preferably shown as a result of a command of the end-user. Such a command can be inserted with one or multiple finger/s 103 of the user, in particular with a swipe/slide movement. Step I shows page A having some figurative elements. Step II shows a sliding movement, wherein page A 105 is moved away and page B 106 appears. Reference number 107 indicates the face of the user (or any other biometric information) and reference number 108 indicates object, in particular face, recognition executed by the optical detection means 101, in particular camera, and a processor device. The object recognition is carried out since application or file 109a is locked. Alternatively, more than one application or file can be locked at the same time. The unlocking processes which is based on the object recognition can be used to unlock multiple locked applications and/or files at the same time, in particular represented by figurative elements on the same page. Furthermore, it is conceivable that multiple sets of reference data belonging to different persons can be stored in a memory, in particular in a device memory. Wherein only some locked applications (authorization needed) can be unlocked by a first person and wherein some of these applications or files or all of these applications or files or further locked applications 110a or files can be unlocked by a further person.

The object recognition is preferably carried out as soon as it is predictable that the user might access a locked application or file. That means, in case the command for changing the figurative elements is inserted the object recognition is triggered in case the figurative elements displayed due to the command are comprising at least one locked application or file.

Step III shows a further situation. The second page 106 is displayed and the applications or files 109b, 110b are unlocked. It is possible that the figurative element (icon) representing the respective application or file on that page is modified in such a manner that a mark is present that shows that the respective element is unlocked.

Step IV shows the insertion of a changing command. In particular page 106 is swiped away 111, in particular to show page A 105 again. It is alternatively possible to swipe to the left and in case a page C exists page C will be shown. In case no page C exists it is possible that page A appears.

The unlocked application/s and/or file/s is/are preferably locked again in case a command for changing the figurative elements is inserted. This is shown in step V.

It is conceivable that the object recognition is triggered to each command that causes a changing of the figurative elements.

Alternatively, it is also possible that the system or method checks if at least one locked application respectively program or file is part of the application/s and/or file/s represented by the figurative element/s displayed next. If a locked application and/or file is part of it the object recognition is triggered and if no locked application or method is part of it the object recognition is not triggered.

Step VI shows selected page 105 again, providing not locked programs respectively applications or files only.

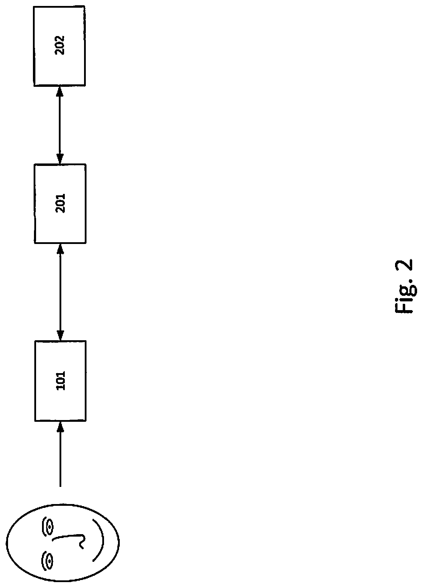

Fig. 2 shows a process of creating authorization keys for each application. A camera 101, in particular a front camera, captures at least one body part of an end-user. The body part may be a face or any other body part, alternatively remote biometric is possible. The captured data is preferably stored on a read only memory respectively a secured memory, in particular encrypted. E.g. with AES128 or higher. In step 202 authorization keys are created based on the stored data.

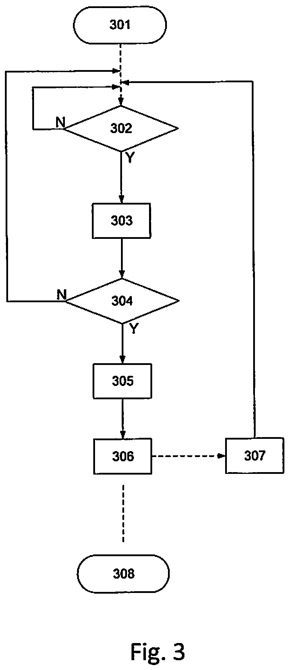

Fig. 3 shows an example of a flowchart of the inventive system respectively of the method executed by the inventive system or computer program product.

Reference number 301 indicates the start of the inventive method, in particular the presents of a home screen. In case the home screen is changed due to a command, in particular in case the home screen is swiped away, then an object, in particular face, recognition is carried out. Reference number 304 indicates a check, if reference data is stored in a storage medium. In case features of that object, in particular face, are captured they are identified in step 305. Based on the identified features authorization key/s are generated in step 306. In case the data representing the detected respectively captured object fits to the reference data stored in a storage medium previously the application/s and/or file/s on that new side are unlocked. In case the application or file is closed again and swiped or slided away 307 the method is redirected to the situation prior to step 302.

Thus, the present invention refers to a method for accessing a restricted program or a restricted file. The inventive method comprises at least the steps:
Providing an end-user device 1 having at least one screen 2 and at least one optical detection means 101, displaying elements 102 representing individual programs or files on a screen 2, wherein the maximum number of programs or files provided or installed on the end-user device 1 is larger than the number of programs or files that can be displayed at a time on the screen 2, displaying further elements representing further programs or files due to a selection command, in particular a sliding command, wherein at least some of the previous displayed elements are not displayed any more due to the selection command,
detecting biometric features of a person that has caused the selection command by means of the optical detection means 101, wherein the detection of biometric features is triggered by the selection command, generating detection data representing said biometric features, comparing the detection data with reference data representing biometric features provided in a data storage means, generating at least one value representing a matching degree of one or more predefined features, allowing access to one or more restricted programs or one or more restricted files in case a matching degree is above a predefined threshold and in case an element representing such a program or file is displayed on the screen 2.

### Reference numbers

- 1: End-user device
- 2: Screen
- 101: Front camera (also any other face recognition or remote biometric is possible)
- 102: Application without authorization need
- 103: User finger (Swipe/Slide)
- 104: Swipe/slide direction (left)
- 105: Page A
- 106: Page B
- 107: User face (or any other biometric information)
- 108: Face recognition
- 109a: Locked application X (authorization needed)
- 109b: Unlocked application X (authorization approved)
- 110a: Locked application Y (authorization needed)
- 110b: Unlocked application Y (authorization approved)
- 111: Swipe/slide direction (right)
- 201: Write only memory/Secured memory
- 202: Authorization keys are created
- 301: Start
- 302: Is page swiped/slided
- 303: Start face recognition
- 304: Is detected face on the database
- 305: Identify the face
- 306: Create authorization keys according to identified face and unlock application
- 307: After page swipe/slide or after a duration again lock applications

## Claims

1. Method for accessing a restricted program or a restricted file,
at least comprising the steps:
Providing an end-user device (1) having at least one screen (2) and at least one optical detection means (101),
Displaying elements (102) representing individual programs or files on a a screen (2) of said at least one screen (2),
wherein the maximum number of programs or files provided or installed on the end-user device (1) is larger than the number of programs or files that can be displayed at a time on the screen (2),
Displaying further elements representing further programs or files on the screen (2) due to a selection
command, in particular a sliding command,
wherein at least some of the previous displayed elements are not displayed any more due to the selection command,
Detecting biometric features of a person that has caused the selection command by means of the optical detection means (101),
wherein the detection of biometric features is triggered by the selection command,
Generating detection data representing said biometric features,
Comparing the detection data with reference data representing biometric features provided in a data storage means,
Generating at least one value representing a matching degree of one or more predefined features,
Allowing access to one or more restricted programs or one or more restricted files in case a matching degree is above a predefined threshold and in case an element representing such a program or file is displayed on the screen (2).

2. Method according to claim 1, wherein the selection command causes displaying of a selection of elements representing programs or files,
wherein a plurality of selection commands causes displaying of a plurality of different selections of elements representing programs or files,
in case a displayed selection of elements represents only non-restricted programs and/or files the selection command does not trigger the detection of biometric features.

3. Method according to claim 1 or claim 2, wherein at least one restricted program provides an encrypted data exchange path via at least one server means to a master unit, wherein an interaction between the master unit and the program takes place in dependency of commands inserted via the display and/or a key board of the end-user device (1).

4. Method according to claim 3 wherein the master unit provides data representing financial transactions, geographic features, video content and/or acoustic content.

5. Method according to any of the preceding claims, wherein the biometric features are features of the face of a human and/or features of a finger print of a human and/or features of the voice of a human.

6. Method according to any of the preceding claims, wherein the reference data is stored on a read only memory of the end user device (1).

7. Method according to any of the preceding claims, wherein in case access is allowed key code data is routed from a preferably encrypted key data container of the end-user device (1) to a routine of the restricted program for unlocking said program
or
in case access is allowed key code data is requested by a routine of the restricted program for unlocking said program, wherein the key code data is requested from a preferably encrypted key data container provided on said end-user device (1).

8. Method according to any of the preceding claims, wherein the end-user device (1) is a mobile phone or a tablet pc or a smart watch.

9. Method according to any of the preceding claims, wherein the optical detection means (101) comprises one or multiple cameras and/or comprises an IR- and/or laser detection and/or a time-of-flight detection.

10. Computer program product comprising instructions which, when the program is executed by a computer, cause the computer to carry out the method of any of the preceding claims.

## Patentansprüche

1. Verfahren zum Zugreifen auf ein Zugang beschränktes Programm oder eine Zugang beschränkte Datei,
mindestens aufweisend die Schritte:
Bereitstellen eines Endbenutzergeräts (1) mit mindestens einem Bildschirm (2) und mindestens einem optischen Erfassungsmittel (101),
Anzeigen von Elementen (102), welche einzelne Programme oder Dateien repräsentieren, auf dem Bildschirm (2) des Endbenutzergeräts (1) oder auf einem der Bildschirme des Endbenutzergeräts (1),
wobei die maximale Anzahl von Programmen oder Dateien, die auf dem Endbenutzergerät (1) bereitgestellt oder installiert werden, größer ist als die Anzahl von Programmen oder Dateien, die gleichzeitig auf dem Bildschirm (2) angezeigt werden können,
Anzeigen weiterer Elemente, die aufgrund eines Auswahlbefehls, insbesondere eines Schiebebefehls, weitere Programme oder Dateien darstellen, auf dem Bildschirm,
wobei zumindest einige der zuvor angezeigten Elemente aufgrund des Auswahlbefehls nicht mehr angezeigt werden,
Erkennen biometrischer Merkmale mittels der optischen Erfassungseinrichtung (101) von einer Person, die den Auswahlbefehl veranlasst hat,
wobei die Erfassung von biometrischen Merkmalen durch den Auswahlbefehl ausgelöst wird,
Erzeugen von Erfassungsdaten, die die biometrischen Merkmale repräsentieren,
Vergleichen der Erfassungsdaten mit Referenzdaten, die in einem Datenspeichermittel bereitgestellte biometrische Merkmale repräsentieren,
Erzeugen von mindestens einem Wert, der einen Übereinstimmungsgrad von einem oder mehreren vordefinierten Merkmalen repräsentiert,
Ermöglichen des Zugriffs auf ein oder mehrere Zugänge beschränkte Programme oder eine oder mehrere Zugang beschränkte Dateien, falls ein Übereinstimmungsgrad über einem vordefinierten Schwellenwert liegt und falls ein Element, das ein solches Programm oder eine solche Datei repräsentiert, auf dem Bildschirm (2) angezeigt wird.

2. Verfahren nach Anspruch 1,
wobei der Auswahlbefehl das Anzeigen einer Auswahl von Elementen bewirkt, die Programme oder Dateien repräsentieren,
wobei eine Vielzahl von Auswahlbefehlen das Anzeigen einer Vielzahl von verschiedenen Auswahlen von Elementen bewirkt, die Programme oder Dateien repräsentieren, falls eine angezeigt Auswahl an Elementen nur nicht Zugang beschränkte Programme und/oder Dateien repräsentiert löst der Auswahlbefehl keine Erkennung biometrischer Merkmale aus.

3. Verfahren nach Anspruch 1 oder 2, wobei mindestens ein Zugang beschränktes Programm einen verschlüsselten Datenaustauschpfad über mindestens eine Servereinrichtung zu einer Mastereinheit bereitstellt, wobei eine Interaktion zwischen der Mastereinheit und dem Programm in Abhängigkeit von Befehlen stattfindet, die über das Display und/oder eine Tastatur des Endbenutzergeräts (1) eingegeben werden.

4. Verfahren nach Anspruch 3, wobei die Mastereinheit Daten bereitstellt, die Finanztransaktionen, geografische Merkmale, Videoinhalte und/oder akustische Inhalte repräsentieren.

5. Verfahren nach einem der vorhergehenden Ansprüche, wobei die biometrischen Merkmale des Gesichts eines Menschen und/oder Merkmale eines Fingerabdrucks eines Menschen und/oder Merkmale der Stimme eines Menschen sind.

6. Verfahren nach einem der vorhergehenden Ansprüche, wobei die Referenzdaten in einem Nur-Lese-Speicher des Endbenutzergeräts (1) gespeichert werden.

7. Verfahren nach einem der vorhergehenden Ansprüche, wobei für den Fall, dass der Zugriff erlaubt ist, Schlüsselcodedaten von einem vorzugsweise verschlüsselten Schlüsseldatencontainer des Endbenutzergeräts (1) zu einer Routine des Zugang beschränkten Programms zum Entsperren des Programms geleitet werden
oder
falls ein Zugriff erlaubt ist, werden Schlüsselcodedaten von einer Routine des Zugang beschränkten Programms zum Entsperren des Programms angefordert, wobei die Schlüsselcodedaten von einem vorzugsweise verschlüsselten Schlüsseldatencontainer angefordert werden, der auf dem Endbenutzergerät (1) bereitgestellt ist.

8. Verfahren nach einem der vorhergehenden Ansprüche, wobei das Endbenutzergerät (1) ein Mobiltelefon oder ein Tablet-PC oder eine Smartwatch ist.

9. Verfahren nach einem der vorhergehenden Ansprüche, wobei das optische Erfassungsmittel (101) eine oder mehrere Kameras aufweist und/oder eine IR- und/oder Lasererfassung und/oder eine Laufzeitmessung aufweist.

10. Computerprogrammprodukt das Anweisungen aufweist, welche bewirken, dass ein Computer das Verfahren nach einem der vorangegangenen Ansprüche ausführt, wenn das Programm von dem Computer ausgeführt wird.

## Revendications

1. Procédé d'accès à un programme ou fichier restreint
comprenant au moins les étapes :
fournir un dispositif d'utilisateur final (1) ayant au moins un écran d'affichage (2) et au moins un moyen de détection optique (101),
l'affichage d'éléments (102) représentant des programmes ou des fichiers individuels sur l'écran (2) de l'appareil de l'utilisateur final (1) ou sur l'un des écrans de l'appareil de l'utilisateur final (1),
dans lequel le nombre maximum de programmes ou de fichiers fournis ou installés sur le dispositif de l'utilisateur final (1) est supérieur au nombre de programmes ou de fichiers qui peuvent être affichés à l'écran (2) simultanément,
Afficher à l'écran d'autres éléments qui représentent d'autres programmes ou fichiers à la suite d'une commande de sélection, en particulier une commande de déplacement,
où au moins certains des éléments précédemment affichés ne sont plus affichés en raison de la commande de sélection,
Reconnaissance des caractéristiques biométriques au moyen du dispositif d'enregistrement optique (101) d'une personne qui a lancé la commande de sélection,
où l'acquisition de caractéristiques biométriques est déclenchée par la commande de sélection,
Génération de données de capture représentant les caractéristiques biométriques,
Comparer les données d'inscription avec les données de référence représentant les caractéristiques biométriques fournies dans un moyen de stockage des données,
Génération d'au moins une valeur représentant un degré de correspondance d'une ou plusieurs caractéristiques prédéfinies,
Autoriser l'accès à un ou plusieurs programmes à accès restreint ou à un ou plusieurs fichiers à accès restreint si un degré de correspondance est supérieur à un seuil prédéfini et si un élément représentant un tel programme ou fichier est affiché à l'écran (2).

2. Procédé selon la revendication 1,
où la commande select provoque l'affichage d'une sélection d'éléments représentant des programmes ou des fichiers,
dans lequel une pluralité de commandes de sélection provoque l'affichage d'une pluralité de sélections différentes d'éléments représentant des programmes ou des fichiers, si une sélection affichée d'éléments ne représente que des programmes et/ou des fichiers restreints non accessibles, la commande de sélection ne déclenche pas de reconnaissance biométrique.

3. Procédé selon la revendication 1 ou 2, dans lequel au moins un programme à accès limité fournit un chemin d'échange de données crypté via au moins un dispositif serveur vers une unité maître, dans lequel l'interaction entre l'unité maître et le programme a lieu en fonction des commandes entrées via l'écran et/ou un clavier du dispositif utilisateur final (1).

4. Procédé selon la revendication 3, dans lequel l'unité maîtresse fournit des données représentant les transactions financières, les caractéristiques géographiques, le contenu vidéo et/ou le contenu acoustique.

5. Procédé selon l'une des revendications précédentes, dans lequel les caractéristiques biométriques sont des caractéristiques d'un visage humain et/ou des caractéristiques d'une empreinte digitale humaine et/ou des caractéristiques d'une voix humaine.

6. Procédé selon l'une des revendications précédentes, dans lequel les données de référence sont stockées dans une mémoire morte du dispositif de l'utilisateur final (1).

7. Procédé selon l'une des revendications précédentes, dans lequel, si l'accès est autorisé, des données de code de clé sont transmises d'un conteneur de données de clé de préférence crypté du dispositif d'utilisateur final (1) à une routine de programme à accès limité pour déverrouiller le programme
ou
si l'accès est autorisé, les données du code clé sont demandées par une routine du programme à accès restreint pour débloquer le programme, les données du code clé étant demandées à partir d'un conteneur de données clé de préférence crypté fourni sur le dispositif de l'utilisateur final (1).

8. Procédé selon l'une des revendications précédentes, dans lequel l'appareil de l'utilisateur final (1) est un téléphone mobile ou une tablette PC ou une Smartwatch.

9. Procédé selon l'une des revendications précédentes, dans lequel le moyen de détection optique (101) comprend une ou plusieurs caméras et/ou possède une détection IR et/ou laser et/ou une mesure du temps de vol.

10. Produit pour un programme informatique qui comporte des instructions qui amènent un ordinateur à exécuter le processus conformément à l'une des revendications précédentes lorsque le programme est exécuté par l'ordinateur.
